# EUROPEAN PATENT SPECIFICATION

(11) **EP 3 125 135 B1**
(45) Date of publication and mention of the grant of the patent: **17.06.2020**
(21) Application number: 16161513.3
(22) Date of filing: 22.03.2016
(51) Int. Cl.: G06F 16/54

(54) **PICTURE PROCESSING METHOD AND DEVICE**
BILDVERARBEITUNGSVERFAHREN UND -VORRICHTUNG
DISPOSITIF ET PROCÉDÉ DE TRAITEMENT D'IMAGES

(30) Priority: 31.07.2015 CN 201510465211
(43) Date of publication of application: 01.02.2017
(73) Proprietor: Xiaomi Inc., Beijing 100085 (CN)
(72) Inventor: ZHANG, Tao, Beijing 100085 (CN); CHEN, Zhijun, Beijing 100085 (CN); LONG, Fei, Beijing 100085 (CN)
(74) Representative: Cabinet Beau de Loménie

(56) References cited:
- WO-A1-2010/047843
- US-A1- 2001 046 330

## Description

### TECHNICAL FIELD

The present disclosure generally relates to the field of information technology, and more particularly to a picture processing method and device.

### BACKGROUND

In modern life, to obtain a satisfactory picture, a user will generally use a mobile terminal to photograph same content for multiple times to obtain a plurality of pictures containing the same content. Since the pictures are of certain sizes, storing all the pictures in the terminal not only will take up terminal memory and impact terminal performance, but also will cause inconvenience to the user in viewing the pictures. Therefore, it is required to process pictures stored in the terminal.

At present, in picture processing according to related art, a user has to open an album application and recognize similar pictures in a picture directory with the naked eye; then the picures are managed by detecting a user operation. A picture is deleted when it is detected that the user selects a delete option on the picture. A picture is saved when it is detected that the user selects a save option on the picture.
WO2010047843 A1 discloses that to arrange images into pages, images captured by at least one imaging device are received. Content-based filtering is applied for removing at least one of the received images to produce a collection of the images. Themebased clustering is then performed on the images in the collection to produce plural clusters of images, where the plural clusters of images are associated with respective themes that are based on time and at least one other attribute that provides an indication of thematic similarity between the images. The plural clusters of images are mapped to respective pages of an output representation.
US20010046330 A1 discloses a method and system for employing image recognition techniques to produce a photocollage from a plurality of images. The system obtains a digital record for each of the plurality of images, assigns each of the digital records a unique identifier and stories the digital records in a database; automatically sorts the digital records using at least one date type to categorize each of the digital records according at least one predetermined criteria; and generates a first draft of a photocollage from the digital records. The method and system provides for alterations of the first draft using either a sticker selected from a plurality of stickers which each have a unique identifier within a data base or a digital file format that allows drag and drop features of both the photocollage and alternative images to be placed within the photocollage. The system employs data types selected from pixel data; metadata; product order information; processing goal information; or customer profile to automatically sort data typically by culling or grouping to categorize according to either an event, a person, or chronologically.

### SUMMARY

Accordingly, the present invention provides a picture processing method and device, in accordance with claims which follow.
The features of the method and device according to the present disclosure are defined in the independent claims, and the preferable features according to the present invention are defined in the dependent claims.

A picture is grouped into a group of similar pictures according to information on attributes of the pictures such as photographing time and picture features of the pictures; pictures are then displayed by groups of similar pictures according to the photographing time, thus facilitating processing, by a user, a picture in a group of similar pictures with a more convenient and less time consuming processing process.

The advantages and technical effects of the device according to the invention correspond to those of the method presented above.

It is to be understood that both the foregoing general description and the following detailed description are exemplary and explanatory only and are not restrictive of the present disclosure.

### BRIEF DESCRIPTION OF THE DRAWINGS

The accompanying drawings here, which are incorporated in and constitute a part of this specification, illustrate embodiments consistent with the present disclosure and, together with the description, serve to explain the principles of the present disclosure.
- Fig.1 is a flowchart of a picture processing method according to an exemplary embodiment;
- Fig.2 is a flowchart of a picture processing method according to an exemplary embodiment;
- Fig.3 is a schematic diagram of a memory space processing page according to an exemplary embodiment;
- Fig.4 is a schematic diagram of groups of similar pictures according to an exemplary embodiment;
- Fig.5 (A) is a schematic diagram of groups of similar pictures according to an exemplary embodiment;
- Fig.5 (B) is a schematic diagram of groups of similar pictures according to an exemplary embodiment;
- Fig.6 is a diagram of a structure of a device for processing similar pictures according to an exemplary embodiment; and
- Fig.7 is a block diagram of a picture processing device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure.

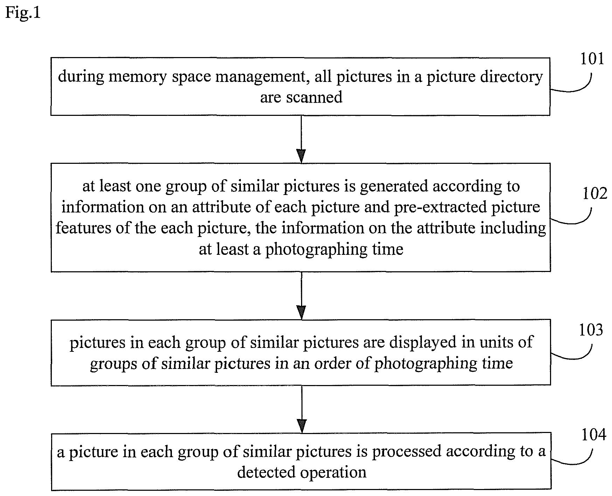

- Fig.1 is a flowchart of a picture processing method according to an exemplary embodiment. As shown in Fig.1, the picture processing method is applied in a terminal and includes steps as follows.

In step 101, during memory space management, all pictures in a picture directory are scanned.

In step 102, at least one group of similar pictures is generated according to information on an attribute of each picture and pre-extracted picture features of the each picture. The information on the attribute includes at least a photographing time.

In step 103, pictures in each group of similar pictures are displayed in units of groups of similar pictures in an order of photographing time.

In step 104, a picture in each group of similar pictures is processed according to a detected operation.

With a method according to an embodiment herein, a picture is grouped into a group of similar pictures according to information on attributes of the pictures such as photographing time and picture features of the pictures; pictures are then displayed by groups of similar pictures according to the photographing time, thus facilitating processing, by a user, a picture in a group of similar pictures with a more convenient and less time consuming processing process.

According to another embodiment herein, the picture features may include a global feature and a local feature.

At least one group of similar pictures may be generated according to the information on the attributes of the pictures and the pre-extracted picture features of the pictures as follows.

The pictures in the picture directory may be divided into groups of pictures according to the information on the attributes of the pictures. Each of the groups of pictures may include at least two pictures.

A similarity of global features of two pictures in a group of pictures and a similarity of local features of the two pictures may be computed.

When the similarity of the global features is larger than a first threshold, and the similarity of the local features is larger than a second threshold, a weighted result may be obtained by weighting the similarity of the global features and the similarity of the local features.

When the weighted result is larger than a third threshold, the two pictures may be set to be similar pictures that are similar to each other.

A group of similar pictures may be formed with all pictures similar to a same picture in the group of pictures.

According to an embodiment herein, a picture in a group of similar pictures may be processed according to a detected operation as follows.

A save option and a delete option may be displayed on a picture of a group of similar pictures.

When it is detected that a delete option on a picture is selected, the picture may be deleted.

When it is detected that a save option on a picture is selected, the picture may be saved.

According to an embodiment herein, after a picture is deleted, a delete instruction may be sent to a server.

The delete instruction may be configured for instructing the server to delete the picture in a cloud memory space.

According to an embodiment herein, the method may further include steps as follows.

A picture management option may be displayed on a memory space management page.

When it is detected that the picture management option is selected, all pictures in the picture directory may be scanned.

An optional embodiment herein may be formed by any combination of aforementioned optional technical solutions, which will not be repeated here.

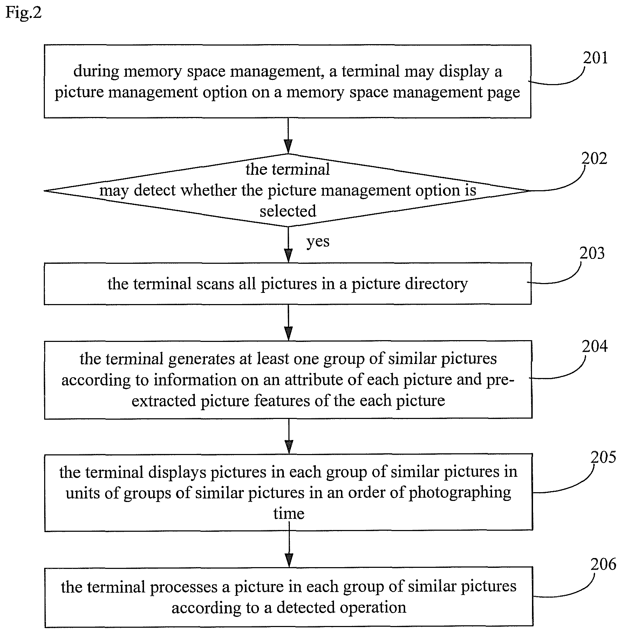

- Fig.2 is a flowchart of a picture processing method according to an exemplary embodiment. As shown in Fig.2, the picture processing method is applied in a terminal, and may include steps as follows.

In step 201, during memory space management, a terminal may display a picture management option on a memory space management page.

A picture may be in various forms, such as that photographed by a camera, that snapshot by a snipping tool,and/or the like. The terminal may be a smart phone, a tablet computer, a desktop computer, and/or the like. The present embodiment does not limit a product type of the terminal. A camera may be installed in the terminal. The terminal may photograph various pictures using the installed camera. A snipping application for capturing a screenshot may be installed in the terminal. The terminal may intercept an image of a certain area on a screen or the whole screen and stores the intercepted image as a picture using the installed snipping application.

Generally, various data may be generated during operation of the terminal, such as stored data, juck data, and so on. Such data occupy the memory space of the terminal, which is limited. Normal operation of the terminal will be affected with the increase of the generated data. In order to ensure smooth operation of the terminal, memory space management may be operated one of which is to clean the generated data, such as junk data. In general, software will be installed in the terminal to manage, such as clean, the junk data generated during the operation of the terminal.

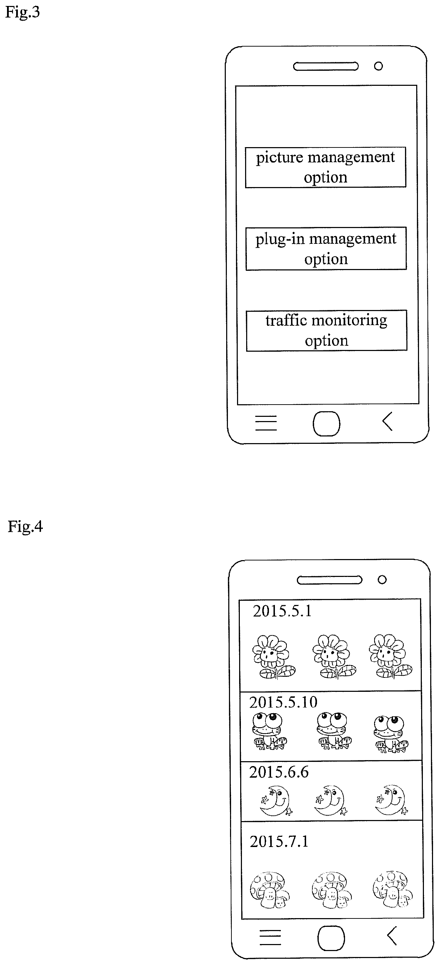

As shown in Fig.3, during memory space management by running a managing software, the terminal may display multiple options including a picture management option, a plug-in management option, a traffic monitoring option, and/or the like on the memory space management page so as to manage, such as to remove, different types of junk data in the terminal.

In step 202, the terminal may detect whether the picture management option is selected. When it is selected, step 203 may be performed.

The terminal may detect whether the picture management option is selected in ways including but not limited to that as follows. A change in a pressure on the screen of the terminal may be detected using a built-in pressure sensor. When it is detected that a pressure on a certain position on the screen of the terminal changes, the terminal will obtain coordinates of the position, and compare the coordinates of the position with an area where the picture management option is located. When the position is within the area where the picture management option is located, it may be determined that the picture management option is selected.

The detection of a pressure change on the screen of the terminal is but one way in which the terminal may detect whether the picture management option is selected. In a practical application, the terminal may detect whether the picture management option is selected in other ways, which are not limited by the present embodiment.

In step 203, the terminal scans all pictures in a picture directory.

In the present embodiment, the picture directory is a specific directory in the terminal for storing a picture. A picture in the picture directory may be a picture taken by a camera, a picture snapshot by a snipping tool, a picture downloaded via a network connection, or a picture received from another terminal by turning on a Bluetooth function, an infrared function, etc. The form of a picture in the picture directory is not limited by the present embodiment.

When scanning the pictures in the picture directory, the terminal may preset a scanning sequence and scan the pictures in the picture directory one by one according to the scanning sequence. The preset scanning sequence may be the photographing time of the pictures, sizes of the pictures and/or the like. Taking the scanning sequence of the photographing time for example, in scanning the pictures in the picture directory, the terminal may perform the scanning in chronological order of the photographing time. For example, the terminal may perform the scan starting from a picture photographed first and in the end scan a picture photographed last. The scanning may also be performed in reverse chronological order. For example, the terminal may first scan a picture photographed last, and in the end scan a picture photographed first.

In step 204, the terminal generates at least one group of similar pictures according to information on an attribute of each picture and pre-extracted picture features of the each picture.

By scanning the pictures in the picture directory in Step 203, the terminal may obtain information on an attribute of each picture, such as a photographing time when the picture is taken, a photographing location where the picture is taken, a size of the picture, a brightness of the picture, a contrast of the picture, a grey scale of the picture, and/or the like. Meanwhile, a feature extracting module built in the terminal may also extract picture features of each picture in the picture directory, and then form a feature file according to extracted picture features. A picture feature may include a global feature and a local feature, and/or the like. A local feature mainly describes a change in a detail of content of a picture, including Scale-Invariant Feature Transform (SIFT), Speed Up Robust Features (SURF), and/or the like. A global feature mainly describes an overall attribute of content of a picture, including a color distribution histogram, a texture histogram of Local Binary Patterns (LBP) and/or the like.

The terminal may generate at least one group of similar pictures according to the information on the attribute of each picture and the pre-extracted picture features of the each picture through steps 1∼3 as follows.

In step 1, the terminal may divide the pictures in the picture directory into groups of pictures according to the information on the attributes of the pictures. Each group of picture may include at least two pictures.

Generally, similar pictures will be generated when the terminal photographs the same content continuously, or photographs the same content for many times within a period of time, or captures a plurality of screenshots of the same area on the screen using a snipping tool within a certain period of time. Such similar pictures will generally have the same attribute information. Based on a difference in the information on the attributes, the terminal may divide the pictures in the picture directory into groups of pictures. Each of the groups of pictures may include at least two pictures.

The terminal may divide the pictures in the picture directory into groups of pictures according to a difference in the information on the attributes in ways as follows.

In an embodiment herein, the terminal may classify, according to the photographing time, pictures photographed in the same period of time into the same group of pictures. For example, a picture A has been photographed at 10:00:00, May 1, 2015; a picture B has been photographed at 10:00:20, May 1, 2015; a picture C has been photographed at 10:00:54, May 1, 2015; a picture D has been photographed at 12:20:10, May 10, 2015; and a picture E has been photographed at 12:20:56, May 10, 2015; then pictures A, B, and C may be classified into one group of pictures, and pictures D and E may be classified into one group of pictures.

According to an embodiment herein, the terminal may classify, according to a photographing location, pictures photographed at the same location into the same group of pictures. For example, a picture A has been photographed at Tiananmen; a picture B has been photographed at the Forbidden City; a picture C has been photographed at the Forbidden City; a picture D has been photographed at the National Stadium; a picture E has been photographed at the National Stadium; and a picture F has been photographed at the Forbidden City; then pictures B, C, and F may be classified into one group of pictures, and pictures D and E may be classified into one group of pictures.

In a practical application, besides division according to the photographing time and the photographing location of each picture, the pictures in the picture directory may also be divided into groups of pictures according to a pixel number, a brightness, a contrast, a grey scale, and/or the like. Of course, the aforementioned conditions may also be combined in any form. In other words, the pictures in the picture directory may be divided according to at least two of the conditions. A combination thereof will not be elaborated in an embodiment herein.

In step 2, the terminal may compute a similarity of global features of two pictures in a group of pictures and a similarity of local features of the two pictures.

Generally, a global feature of a picture consists of feature values of key points at different positions. In computing the similarity of global features of two pictures, an Euclidean distance between feature values at the same position on the two pictures may be computed. After computation has been done for feature values at all the positions, the terminal will count a number of feature values with Euclidean distances smaller than a preset value, and then compute a proportion of the number of the feature values with Euclidean distances smaller than the preset value in all feature values involved in the comutation. The proportion is the similarity of the global features.

In practical computation, besides computing an Euclidean distance between global features of the two pictures, a cosine distance between global features of the two pictures may also be computed. Of course, other methods may also be adopted, which will not be described one by one herein.

The similarity of the local features of two pictures may also be computed in a way similar to that for computing the similarity of the global features. Refer to computing the similarity of the global features for a specific computing principle thereof, which will not be repeated here.

When the similarity of the global features is larger than a first threshold, and the similarity of the local features is larger than a second threshold, a weighted result may be obtained by weighting the similarity of the global features and the similarity of the local features according to weights preset for the similarity of the global features and the similarity of the local features. When the weighted result is larger than a third threshold, the two pictures may be set to be similar pictures that are similar to each other. The first threshold may be 60%, 70% and/or the like. The second threshold may be 50%, 65% and/or the like. The third threshold may be 40%, 63% and/or the like. Values of the first threshold, the second threshold, and the third threshold are not limited by the present embodiment.

The values of the first threshold, the second threshold, and the third threshold are examples only and are not intended for limiting the thresholds.

In step 3, the terminal may form a group of similar pictures with all pictures similar to a same picture in the group of pictures.

After comparison has been performed in the aforementioned way on all pictures in a group of pictures, a relationship between any two pictures in a group of pictures may be determined. In this case, a group of similar pictures may be formed with all pictures similar to a same picture in the group of pictures. For example, there are five pictures A, B, C, D, and E in a group of pictures. When pictures A and B are similar pictures, pictures B and C are similar pictures, pictures A and C are not similar pictures, pictures A and D are not similar pictures, pictures B and D are not similar pictures, and pictures D and E are similar pictures, then a group of similar pictures may be formed with pictures A, B, and C, and a group of similar pictures may be formed with pictures D and E.

In step 205, the terminal displays pictures in each group of similar pictures in units of groups of similar pictures in an order of photographing time.

After the pictures in the picture directory have been divided into groups of similar pictures, to facilitate processing, by the user, pictures in a group of similar pictures, the terminal will further display pictures in each group of similar pictures in units of groups of similar pictures according to the photographing time. The terminal may perform the displaying in chronological order of the photographing time or in reverse chronological order of the photographing time. For example, Fig.4 shows pictures in a group of similar pictures displayed in reverse chronological order of the photographing time.

In step 206, the terminal processes a picture in each group of similar pictures according to a detected operation.

To facilitate processing each picture, the terminal will further display a save option and a delete option on each picture of each group of similar pictures. The save option or the delete option may be in form of a menu or a button. A form of the save option or the delete option is not limited by the present embodiment. When all pictures are displayed according to a time sequence in clusters of similar pictures, the user may view these pictures rapidly. The terminal may detect an operation of the user and process pictures in each group of similar pictures. When it is detected that a delete option on a picture is selected, the terminal will delete the picture. When it is detected that a save option on a picture is selected, the terminal will save the picture.

Generally, to prevent a picture stored in the terminal from being lost, the user may further back up a picture in the terminal on a cloud memory of a server. Therefore, after the terminal has deleted a picture and managed the memory space per se, the terminal will further send a delete instruction to the server. The delete instruction may be configured for instructing the server to delete the picture in a cloud memory space to manage the cloud memory space of the server.

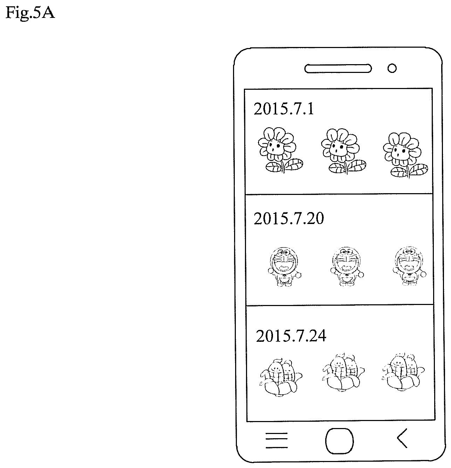

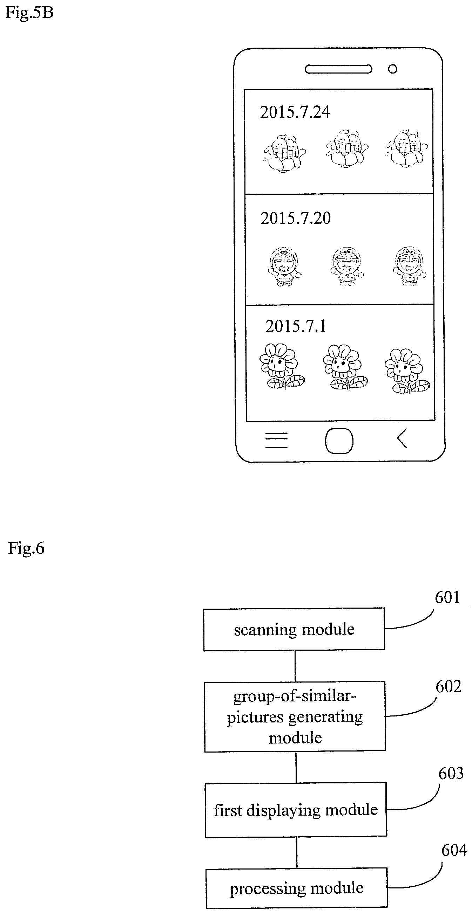

After pictures in a group of similar pictures are processed in this way, when the user saves only one picture in the group of similar pictures, the one picture will not be displayed the next time a group of similar pictures is to be displayed. When some similar pictures have been added in the terminal, the added pictures will be displayed together with pictures in an original group of similar pictures next time pictures in a group of similar pictures are to be managed. When the terminal displays pictures in a group of similar pictures in chronological order of the photographing time, the added group of similar pictures will be displayed after a group of similar pictures saved by the user, as shown in Fig.5 (A). When the terminal displays pictures in a group of similar pictures in reverse chronological order of the photographing time, then the added group of similar pictures will be displayed before a group of similar pictures saved by the user, as shown in Fig.5 (B).

With a method according to an embodiment herein, a picture is grouped into a group of similar pictures according to information on attributes of the pictures such as photographing time and picture features of the pictures; pictures are then displayed by groups of similar pictures according to the photographing time, thus facilitating processing, by a user, a picture in a group of similar pictures with a more convenient and less time consuming processing process.
- Fig.6 is a diagram of a picture processing device according to an exemplary embodiment. Referring to Fig.6, the device includes: a scanning module 601, a group-of-similar-pictures generating module 602, a first displaying module 603, and a processing component 604.

The scanning module 601 is configured for: during memory space management, scanning all pictures in a picture directory.

The group-of-similar-pictures generating module 602 is configured for: generating at least one group of similar pictures according to information on an attribute of each picture and pre-extracted picture features of the each picture. The information on the attribute may include at least a photographing time.

The first displaying module 603 is configured for: displaying pictures in each group of similar pictures in units of groups of similar pictures in an order of photographing time.

The processing component 604 is configured for: processing a picture in each group of similar pictures according to a detected operation.

According to an embodiment herein, the picture features may include a global feature and a local feature.

The group-of-similar-pictures generating module 602 is configured for: dividing the pictures in the picture directory into groups of pictures, each of the groups of pictures including at least two pictures; computing a similarity of global features of two pictures in a group of pictures and a similarity of local features of the two pictures; when the similarity of the global features is larger than a first threshold, and the similarity of the local features is larger than a second threshold, obtaining a weighted result by weighting the similarity of the global features and the similarity of the local features; when the weighted result is larger than a third threshold, setting the two pictures to be similar pictures that are similar to each other; and forming a group of similar pictures with all pictures similar to a same picture in the group of pictures.

According to an embodiment herein, the processing module 604 may be configured for: displaying a save option and a delete option on each picture of each group of similar pictures; when it is detected that a delete option on a picture is selected, deleting the picture; when it is detected that a save option on a picture is selected, saving the picture.

According to an embodiment herein, the device may further include a sending module.

The sending module may be configured for: sending a delete instruction to a server, wherein the delete instruction is configured for instructing the server to delete the picture in a cloud memory space.

According to an embodiment herein, the device may further include a second displaying module.

The second displaying module may be configured for: displaying a picture management option on a memory space management page.

The scanning module 601 may be configured for: when it is detected that the picture management option is selected, scanning all pictures in the picture directory.

A device according to an embodiment herein, a picture is grouped into a group of similar pictures according to information on attributes of the pictures such as photographing time and picture features of the pictures; pictures are then displayed by groups of similar pictures according to the photographing time, thus facilitating processing, by a user, a picture in a group of similar pictures with a more convenient and less time consuming processing process.

With respect to the devices in the above embodiments, the specific manners for performing operations for individual modules therein have been described in detail in the embodiments regarding picture processing methods, which will not be elaborated herein.

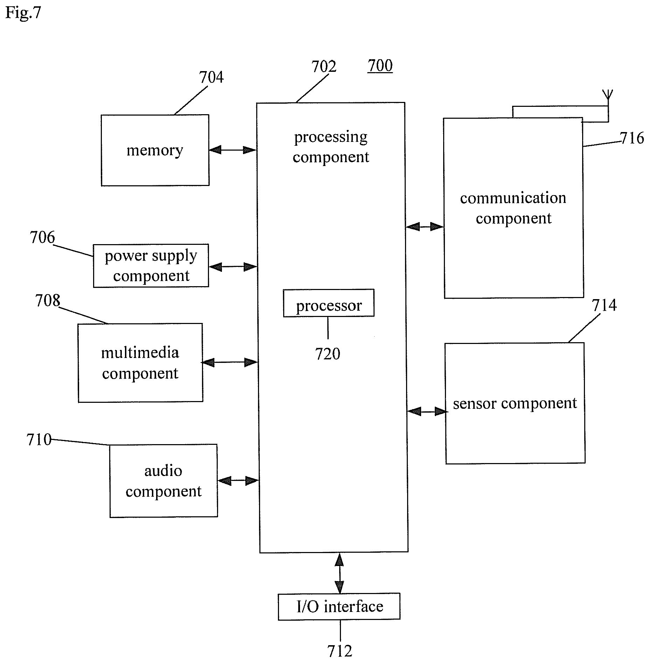

- Fig.7 is a block diagram of a picture processing device 700 according to an exemplary embodiment. For example, the device 700 may be a mobile phone, a computer, a digital broadcasting terminal, a message transceiver, a game console, a tablet device, a medical device, a fitness device, a personal digital assistant, and/or the like.

Referring to Fig.7, the device 700 may include one or more components as follows: a processing component 702, a memory 704, a power supply component 706, a multimedia component 708, an audio component 710, an Input/Output (I/O) interface 712, a sensor component 714, and a communication component 716.

Generally, the processing component 702 controls an overall operation of the device 700, such as operations associated with display, a telephone call, data communication, a camera operation and a recording operation. The processing component 702 may include one or more processors 720 to execute instructions so as to complete all or some steps of the method. In addition, the processing component 702 may include one or more modules to facilitate interaction between the processing component 702 and other components. For example, the processing component 702 may include a multimedia module to facilitate interaction between the multimedia component 708 and the processing component 702.

The memory 704 may be configured for storing various types of data to support the operation on the terminal 700. Example of such data may include instructions of any application or method operating on the device 700, contact data, phonebook data, messages, pictures, videos, and the like. The memory 704 may be realized by any type of volatile or non-transitory storage equipment or combination thereof, such as Static Random Access Memory (SRAM), Electrically Erasable Programmable Read-Only Memory (EEPROM), Erasable Programmable Read-Only Memory (EPROM), Programmable Read-Only Memory (PROM), Read-Only Memory (ROM), magnetic memory, flash memory, magnetic disk, or compact disk.

The power supply component 706 may supply electric power to various components of the device 700. The power supply component 706 may include a power management system, one or more power sources, and other components related to generating, managing and distributing electricity for the device 700.

The multimedia component 708 may include a screen providing an output interface between the device 700 and a user. In some embodiments, the screen may include a Liquid Crystal Display (LCD) and a Touch Panel (TP). If the screen includes a TP, the screen may be realized as a touch screen to receive an input signal from a user. The TP may include one or more touch sensors for sensing touch, slide and gestures on the TP. The touch sensors not only may sense the boundary of a touch or slide move, but also detect the duration and pressure related to the touch or slide move. In some embodiments, the multimedia component 708 may include a front camera and/or a rear camera. When the device 700 is in operation, for example a shooting mode or a video mode, the front camera and/or the rear camera may receive external multimedia data. Each of the front camera and the rear camera may be a fixed optical lens system or may have a focal length and be capable of optical zooming.

The audio component 710 may be configured for outputting and/or inputting an audio signal. For example, the audio component 710 may include a microphone (MIC). When the device 700 is in an operation mode such as a call mode, a recording mode, and a voice recognition mode, the MIC may be configured for receiving an external audio signal. The received audio signal may be further stored in the memory 704 or may be sent via the communication component 716. In some embodiments, the audio component 710 may further include a loudspeaker configured for output the audio signal.

The I/O interface 712 may provide an interface between the processing component 702 and a peripheral interface module. Such a peripheral interface module may be a keypad, a click wheel, a button or the like. Such a button may include but is not limited to: a homepage button, a volume button, a start button, and a lock button.

The sensor component 714 may include one or more sensors for assessing various states of the device 700. For example, the sensor component 714 may detect an on/off state of the device 700 and relative positioning of components such as the display and the keypad of the device 700. The sensor component 714 may also detect change in the position of the device 700 or of a component of the device 700, whether there is contact between the terminal and a user, the orientation or acceleration/deceleration of the device 700, and change in the temperature of the device 700. The sensor component 714 may include a proximity sensor configured for detecting existence of a nearby object without physical contact. The sensor component 714 may also include an optical sensor such as a Complementary Metal-Oxide-Semiconductor (CMOS) or Charge-Coupled-Device (CCD) image sensor used in an imaging application. In some embodiments, the sensor component 714 may also include an acceleration sensor, a gyroscope sensor, a magnetic sensor, a pressure sensor, or a temperature sensor.

The communication component 716 may be configured for facilitating wired or wireless communication between the device 700 and other equipment. The device 700 may access a wireless network based on a communication standard such as WiFi, 2G or 3G, or combination thereof. In an exemplary embodiment, the communication component 716 may receive a broadcast signal or broadcast related information from an external broadcast management system via a broadcast channel. In an exemplary embodiment, the communication component 716 may also include a Near Field Communication (NFC) module for short-range communication. For example, the NFC module may be based on Radio Frequency Identification (RFID), Infrared Data Association (IrDA), Ultra-Wideband (UWB) technology, Bluetooth (BT), and other technologies.

In an exemplary embodiment, the device 700 may be realized by one or more of Application Specific Integrated Circuits (ASIC), Digital Signal Processors (DSP), Digital Signal Processing Device (DSPD), Programmable Logic Devices (PLD), Field Programmable Gate Arrays (FPGA), controllers, microcontrollers, microprocessors or other electronic components to implement the method.

In an exemplary embodiment, a non-transitory computer-readable storage medium including instructions, such as a memory 704 including instructions, may be provided. The instructions may be executed by the processor 720 of the device 700 to implement the method. For example, the non-transitory computer-readable storage medium may be a Read-Only Memory (ROM), a Compact Disc Read-Only Memory (CD-ROM), a magnetic tape, a floppy disk, optical data storage equipment, etc.

A non-transitory computer readable storage medium enables a mobile terminal to execute a picture processing method when instructions in the storage medium are executed by a processor of the mobile terminal. The method includes steps as follows.

During memory space management, all pictures in a picture directory are scanned.

At least one group of similar pictures is generated according to information on an attribute of each picture and pre-extracted picture features of the each picture. The information on the attribute may include at least a photographing time.

Pictures in each group of similar pictures are displayed in units of groups of similar pictures in an order of photographing time.

A picture in each group of similar pictures is processed according to a detected operation.

According to another embodiment herein, the picture features may include a global feature and a local feature.

At least one group of similar pictures may be generated according to the information on the attributes of the pictures and the pre-extracted picture features of the pictures as follows.

The pictures in the picture directory may be divided into groups of pictures. Each of the groups of pictures may include at least two pictures.

A similarity of global features of two pictures in a group of pictures and a similarity of local features of the two pictures may be computed.

When the similarity of the global features is larger than a first threshold, and the similarity of the local features is larger than a second threshold, a weighted result may be obtained by weighting the similarity of the global features and the similarity of the local features.

When the weighted result is larger than a third threshold, the two pictures may be set to be similar pictures that are similar to each other.

A group of similar pictures may be formed with all pictures similar to a same picture in the group of pictures.

According to an embodiment herein, a picture in a group of similar pictures may be processed according to a detected operation as follows.

A save option and a delete option may be displayed on a picture of a group of similar pictures.

When it is detected that a delete option on a picture is selected, the picture may be deleted.

When it is detected that a save option on a picture is selected, the picture may be saved. According to an embodiment herein, after a picture is deleted, a delete instruction may be sent to a server.

The delete instruction may be configured for instructing the server to delete the picture in a cloud memory space..

According to an embodiment herein, the method may further include steps as follows.

A picture management option may be displayed on a memory space management page.

When it is detected that the picture management option is selected, all pictures in the picture directory may be scanned.

With a non-transitory computer readable storage medium according to an embodiment herein, a picture is grouped into a group of similar pictures according to information on attributes of the pictures such as photographing time and picture features of the pictures; pictures are then displayed by groups of similar pictures according to the photographing time, thus facilitating processing, by a user, a picture in a group of similar pictures with a more convenient and less time consuming processing process.

Other embodiments of the invention will be apparent to those skilled in the art from consideration of the specification and practice of the invention disclosed here. This application is intended to cover any variations, uses, or adaptations of the invention as long as they are within the scope of the independent claims.

### INDUSTRIAL APPLICABILITY

A picture is grouped into a group of similar pictures according to information on attributes of the pictures such as photographing time and picture features of the pictures; pictures are then displayed by groups of similar pictures according to the photographing time, thus facilitating processing, by a user, a picture in a group of similar pictures with a more convenient and less time consuming processing process.

## Claims

1. A picture processing method, comprising :
during memory space management, scanning all pictures in a picture directory (101, 203);
generating at least one group of similar pictures according to information on an attribute of each picture and pre-extracted picture features of the each picture (102, 204), wherein the information on the attribute comprises at least a photographing time;
displaying pictures in each group of similar pictures in units of groups of similar pictures in an order of photographing time (103, 205); and
processing a picture in each group of similar pictures according to a detected operation (104, 206),
wherein the picture features comprises a global feature and a local feature;
the step of generating at least one group of similar pictures according to information on an attribute of each picture and the pre-extracted picture features of the each picture comprises:
dividing the pictures in the picture directory into groups of pictures according to the information on the attribute of the each picture, wherein each of the groups of pictures comprises at least two pictures;
computing a similarity of global features of two pictures in a group of pictures and a similarity of local features of the two pictures;
when the similarity of the global features is larger than a first threshold, and the similarity of the local features is larger than a second threshold, obtaining a weighted result by weighting the similarity of the global features and the similarity of the local features;
when the weighted result is larger than a third threshold, setting the two pictures to be similar pictures similar to each other; and
forming a group of similar pictures with all pictures similar to a same picture in the group of pictures,
wherein the global feature describes an overall attribute of content of a picture, and comprises a color distribution histogram and a texture histogram of Local Binary Patterns, LBP,
wherein the local feature describes a change in a detail of content of the picture, and comprises Scale-Invariant Feature Transform, SIFT, and Speed Up Robust Features, SURF,
wherein the global feature and the local feature each consists of feature values of key points at different positions on the picture,
wherein the computing a similarity of global features of two pictures in a group of pictures and a similarity of local features of the two pictures comprises: for each similarity of the similarity of the global features of the two pictures and the similarity of the local features of the two pictures, computing an Euclidean distance or a cosine distance between the feature values at a same position on the two pictures; after the distance computation has been done for the feature values at all the positions, counting a number of feature values with Euclidean distances or cosine distances smaller than a preset value; computing the each similarity as a proportion of the number of the feature values with the Euclidean distances or the cosine distances smaller than the preset value in all feature values involved in the distance computation.

2. The method according to claim 1, wherein the step of processing a picture in each group of similar pictures according to a detected operation comprises:
displaying a save option and a delete option on each picture of each group of similar pictures;
when it is detected that a delete option on a picture is selected, deleting the picture;
when it is detected that a save option on a picture is selected, saving the picture.

3. The method according to claim 2, further comprising: after the step of deleting the picture,
sending a delete instruction to a server, wherein the delete instruction is configured for instructing the server to delete the picture in a cloud memory space.

4. The method according to any one of claims 1 to 3, further comprising:
displaying a picture management option on a memory space management page (201),
wherein when it is detected that the picture management option is selected, the step of scanning all pictures in a picture directory (101, 203) is executed.

5. A picture processing device, comprising :
a scanning module (601), configured for: during memory space management, scanning all pictures in a picture directory;
a group-of-similar-pictures generating module (602), configured for: generating at least one group of similar pictures according to information on an attribute of each picture and pre-extracted picture features of the each picture, wherein the information on the attribute comprises at least a photographing time;
a first displaying module (603), configured for: displaying pictures in each group of similar pictures in units of groups of similar pictures in an order of photographing time; and
a processing module (604) configured for: processing a picture in each group of similar pictures according to a detected operation,
wherein the picture features comprises a global feature and a local feature;
the group-of-similar-pictures generating module (602) is configured for: dividing the pictures in the picture directory into groups of pictures according to the information on the attribute of the each picture, wherein each of the groups of pictures comprises at least two pictures; computing a similarity of global features of two pictures in a group of pictures and a similarity of local features of the two pictures; when the similarity of the global features is larger than a first threshold, and the similarity of the local features is larger than a second threshold, obtaining a weighted result by weighting the similarity of the global features and the similarity of the local features; when the weighted result is larger than a third threshold, setting the two pictures to be similar pictures similar to each other; and forming a group of similar pictures with all pictures similar to a same picture in the group of pictures,
wherein the global feature describes an overall attribute of content of a picture, and comprises a color distribution histogram and a texture histogram of Local Binary Patterns, LBP,
wherein the local feature describes a change in a detail of content of the picture, and comprises Scale-Invariant Feature Transform, SIFT, and Speed Up Robust Features, SURF,
wherein the global feature and the local feature each consists of feature values of key points at different positions on the picture,
wherein the group-of-similar-pictures generating module (602) is configured for computing the similarity of the global features of the two pictures and the similarity of the local features of the two pictures by: for each similarity of the similarity of the global features of the two pictures and the similarity of the local features of the two pictures, computing an Euclidean distance or a cosine distance between the feature values at a same position on the two pictures; after the distance computation has been done for the feature values at all the positions, counting a number of feature values with Euclidean distances or cosine distances smaller than a preset value; computing the each similarity as a proportion of the number of the feature values with the Euclidean distances or the cosine distances smaller than the preset value in all feature values involved in the distance computation.

6. The device according to claim 5, configured for: displaying a save option and a delete option on each picture of each group of similar pictures; when it is detected that a delete option on a picture is selected, deleting the picture; when it is detected that a save option on a picture is selected, saving the picture.

7. The device according to claim 6, further comprising:
a sending module, configured for: sending a delete instruction to a server, wherein the delete instruction is configured for instructing the server to delete the picture in a cloud memory space.

8. The device according to any one of claims 5 to 7, further comprising:
a second displaying module, configured for: displaying a picture management option on a memory space management page,
wherein the scanning module (601) is configured for: when it is detected that the picture management option is selected, scanning all pictures in the picture directory.

9. A computer program comprising instructions for executing the steps of the method according to any one of claims 1 to 4 when said program is executed by a computer.

10. A recording medium readable by a computer and having recorded thereon a computer program comprising instructions that, when executed by the computer, make it perform the steps of the method according to any one of claims 1 to 4.

## Patentansprüche

1. Bildverarbeitungsverfahren, umfassend:
während einer Speicherplatzverwaltung Scannen aller Bilder in einem Bilderverzeichnis (101, 203),
Erstellen von mindestens einer Gruppe von ähnlichen Bildern gemäß Informationen zu einem Attribut eines jeweiligen Bildes und vorher extrahierten Bildmerkmalen des jeweiligen Bildes (102, 204), wobei die Informationen zu dem Attribut mindestens eine Bildaufnahmezeit umfassen,
Anzeigen von Bildern in jeder Gruppe von ähnlichen Bildern in Einheiten von Gruppen von ähnlichen Bildern in einer Reihenfolge einer Bildaufnahmezeit (103, 205), und
Verarbeiten eines Bildes in jeder Gruppe von ähnlichen Bildern gemäß einem erfassten Arbeitsvorgang (104, 206),
wobei die Bildmerkmale ein globales Merkmal und ein lokales Merkmal umfassen
und der Schritt des Erstellens von mindestens einer Gruppe von ähnlichen Bildern gemäß Informationen zu einem Attribut eines jeweiligen Bildes und den vorher extrahierten Bildmerkmalen des jeweiligen Bildes umfasst:
Unterteilen der Bilder in dem Bilderverzeichnis in Gruppen von Bildern gemäß den Informationen zu dem Attribut des jeweiligen Bildes, wobei jede der Gruppen von Bildern mindestens zwei Bilder umfasst,
Berechnen einer Ähnlichkeit von globalen Merkmalen von zwei Bildern in einer Gruppe von Bildern und einer Ähnlichkeit von lokalen Merkmalen der beiden Bilder,
wenn die Ähnlichkeit der globalen Merkmale größer als eine erste Schwelle ist und die Ähnlichkeit der lokalen Merkmale größer als eine zweite Schwelle ist, Erhalten eines gewichteten Ergebnisses durch Gewichten der Ähnlichkeit der globalen Merkmale und der Ähnlichkeit der lokalen Merkmale,
wenn das gewichtete Ergebnis größer als eine dritte Schwelle ist, Einstellen der beiden Bilder als ähnliche Bilder, die einander ähnlich sind, und
Bilden einer Gruppe von ähnlichen Bildern mit allen Bildern, die einem gleichen Bild in der Gruppe von Bildern ähnlich sind,
wobei das globale Merkmal ein Gesamtattribut eines Inhalts eines Bildes beschreibt und ein Farbverteilungshistogramm und ein Texturhistogramm von lokalen binären Mustern, LBP, umfasst,
wobei das lokale Merkmal eine Änderung eines Details eines Inhalts des Bildes beschreibt und skaleninvariante Merkmalstransformation, SIFT, und beschleunigte robuste Merkmale, SURF, umfasst,
wobei das globale Merkmal und das lokale Merkmal jeweils aus Merkmalswerten von Schlüsselpunkten an unterschiedlichen Positionen auf dem Bild bestehen,
wobei das Berechnen einer Ähnlichkeit von globalen Merkmalen von zwei Bildern in einer Gruppe von Bildern und einer Ähnlichkeit von lokalen Merkmalen der beiden Bilder umfasst: für jede Ähnlichkeit von der Ähnlichkeit der globalen Merkmale der beiden Bilder und der Ähnlichkeit der lokalen Merkmale der beiden Bilder Berechnen eines euklidischen Abstands oder eines Kosinus-Abstands zwischen den Merkmalswerten an einer gleichen Position auf den beiden Bildern, nachdem die Abstandsberechnung für die Merkmalswerte an all den Positionen vorgenommen wurde, Zählen einer Anzahl von Merkmalswerten mit euklidischen Abständen oder Kosinus-Abständen, die kleiner als ein voreingestellter Wert sind, Berechnen der jeweiligen Ähnlichkeit als einen Anteil der Anzahl der Merkmalswerte mit den euklidischen Abständen oder den Kosinus-Abständen, die kleiner als der voreingestellte Wert sind, in allen Merkmalswerten, die an der Abstandsberechnung beteiligt sind.

2. Verfahren nach Anspruch 1, wobei der Schritt des Verarbeitens eines Bildes in jeder Gruppe von ähnlichen Bildern gemäß einem erfassten Arbeitsvorgang umfasst:
Anzeigen einer Speicheroption und einer Löschoption auf jedem Bild von jeder Gruppe von ähnlichen Bildern,
wenn erfasst wird, dass eine Löschoption auf einem Bild ausgewählt wird, Löschen des Bildes,
wenn erfasst wird, dass eine Speicheroption auf einem Bild ausgewählt wird, Speichern des Bildes.

3. Verfahren nach Anspruch 2, ferner umfassend nach dem Schritt des Löschens des Bildes
Senden einer Löschanweisung an einen Server, wobei die Löschanweisung dazu ausgestaltet ist, den Server anzuweisen, das Bild an einem Cloud-Speicherplatz zu löschen.

4. Verfahren nach einem der Ansprüche 1 bis 3, ferner umfassend:
Anzeigen einer Bildverwaltungsoption auf einer Speicherplatzverwaltungsseite (201),
wobei, wenn erfasst wird, dass die Bildverwaltungsoption ausgewählt wird, der Schritt des Scannens aller Bilder in einem Bilderverzeichnis (101, 203) ausgeführt wird.

5. Bildverarbeitungsvorrichtung, umfassend:
ein Scanmodul (601), das dazu ausgestaltet ist, während einer Speicherplatzverwaltung alle Bilder in einem Bilderverzeichnis zu scannen,
ein Modul (602) zur Erstellung von Gruppen von ähnlichen Bildern, das dazu ausgestaltet ist, mindestens eine Gruppe von ähnlichen Bildern gemäß Informationen zu einem Attribut eines jeweiligen Bildes und vorher extrahierten Bildmerkmalen des jeweiligen Bildes zu erstellen, wobei die Informationen zu dem Attribut mindestens eine Bildaufnahmezeit umfassen,
ein erstes Anzeigemodul (603), das dazu ausgestaltet ist, Bilder in jeder Gruppe von ähnlichen Bildern in Einheiten von Gruppen von ähnlichen Bildern in einer Reihenfolge einer Bildaufnahmezeit anzuzeigen, und
ein Verarbeitungsmodul (604), das dazu ausgestaltet ist, ein Bild in jeder Gruppe von ähnlichen Bildern gemäß einem erfassten Arbeitsvorgang zu verarbeiten,
wobei die Bildmerkmale ein globales Merkmal und ein lokales Merkmal umfassen,
wobei das Modul (602) zur Erstellung von Gruppen von ähnlichen Bildern dazu ausgestaltet ist, die Bilder in dem Bilderverzeichnis in Gruppen von Bildern gemäß den Informationen zu dem Attribut des jeweiligen Bildes zu unterteilen, wobei jede der Gruppen von Bildern mindestens zwei Bilder umfasst, eine Ähnlichkeit von globalen Merkmalen von zwei Bildern in einer Gruppe von Bildern und eine Ähnlichkeit von lokalen Merkmalen der beiden Bilder zu berechnen, wenn die Ähnlichkeit der globalen Merkmale größer als eine erste Schwelle ist und die Ähnlichkeit der lokalen Merkmale größer als eine zweite Schwelle ist, ein gewichtetes Ergebnis durch Gewichten der Ähnlichkeit der globalen Merkmale und der Ähnlichkeit der lokalen Merkmale zu erhalten, wenn das gewichtete Ergebnis größer als eine dritte Schwelle ist, die beiden Bilder, die einander ähnlich sind, als ähnliche Bilder einzustellen und eine Gruppe von ähnlichen Bildern mit allen Bildern, die einem gleichen Bild in der Gruppe von Bildern ähnlich sind, zu bilden,
wobei das globale Merkmal ein Gesamtattribut eines Inhalts eines Bildes beschreibt und ein Farbverteilungshistogramm und ein Texturhistogramm von lokalen binären Mustern, LBP, umfasst,
wobei das lokale Merkmal eine Änderung eines Details eines Inhalts des Bildes beschreibt und skaleninvariante Merkmalstransformation, SIFT, und beschleunigte robuste Merkmale, SURF, umfasst,
wobei das globale Merkmal und das lokale Merkmal jeweils aus Merkmalswerten von Schlüsselpunkten an unterschiedlichen Positionen auf dem Bild bestehen,
wobei das Modul (602) zur Erstellung von Gruppen von ähnlichen Bildern zum Berechnen der Ähnlichkeit der globalen Merkmale der zwei Bilder und der Ähnlichkeit der lokalen Merkmale der zwei Bilder ausgestaltet ist durch: für jede Ähnlichkeit von der Ähnlichkeit der globalen Merkmale der zwei Bilder und der Ähnlichkeit der lokalen Merkmale der zwei Bilder Berechnen eines euklidischen Abstands oder eines Kosinus-Abstands zwischen den Merkmalswerten an einer gleichen Position auf den zwei Bildern, nachdem die Abstandsberechnung für die Merkmalswerte an all den Positionen vorgenommen wurde, Zählen einer Anzahl von Merkmalswerten mit euklidischen Abständen oder Kosinus-Abständen, die kleiner als ein voreingestellter Wert sind, Berechnen der jeweiligen Ähnlichkeit als einen Anteil der Anzahl der Merkmalswerte mit den euklidischen Abständen oder den Kosinus-Abständen, die kleiner als der voreingestellte Wert sind, in allen Merkmalswerten, die an der Abstandsberechnung beteiligt sind.

6. Vorrichtung nach Anspruch 5, die dazu ausgestaltet ist, eine Speicheroption und eine Löschoption auf jedem Bild von jeder Gruppe von ähnlichen Bildern anzuzeigen, wenn erfasst wird, dass eine Löschoption auf einem Bild ausgewählt wird, das Bild zu löschen, wenn erfasst wird, dass eine Speicheroption auf einem Bild ausgewählt wird, Speichern des Bildes.

7. Vorrichtung nach Anspruch 6, ferner umfassend:
ein Sendemodul, das dazu ausgestaltet ist, eine Löschanweisung an einen Server zu senden, wobei die Löschanweisung dazu ausgestaltet ist, den Server anzuweisen, das Bild an einem Cloud-Speicherplatz zu löschen.

8. Vorrichtung nach einem der Ansprüche 5 bis 7, ferner umfassend:
ein zweites Anzeigemodul, das dazu ausgestaltet ist, eine Bildverwaltungsoption auf einer Speicherplatzverwaltungsseite anzuzeigen,
wobei das Scanmodul (601) dazu ausgestaltet ist, wenn erfasst wird, dass die Bildverwaltungsoption ausgewählt wird, alle Bilder in dem Bilderverzeichnis zu scannen.

9. Computerprogramm, das Anweisungen zum Ausführen der Schritte des Verfahrens nach einem der Ansprüche 1 bis 4, wenn das Programm von einem Computer ausgeführt wird, umfasst.

10. Aufzeichnungsmedium, das von einem Computer lesbar ist und auf dem ein Computerprogramm gespeichert ist, das Anweisungen umfasst, die bei Ausführung durch den Computer bewirken, dass er die Schritte des Verfahrens nach einem der Ansprüche 1 bis 4 durchführt.

## Revendications

1. Procédé de traitement d'image, comprenant les étapes ci-dessous consistant à :
au cours d'une gestion d'espace mémoire, balayer toutes les images dans un répertoire d'images (101, 203) ;
générer au moins un groupe d'images similaires selon des informations sur un attribut de chaque image et des caractéristiques d'images pré-extraites de ladite chaque image (102, 204), dans lequel les informations sur l'attribut comprennent au moins un temps de photographie ;
afficher des images dans chaque groupe d'images similaires en unités de groupes d'images similaires dans un ordre de temps de photographie (103, 205) ; et
traiter une image dans chaque groupe d'images similaires selon une opération détectée (104, 206) ;
dans lequel les caractéristiques d'image comprennent une caractéristique globale et une caractéristique locale ;
l'étape de génération d'au moins un groupe d'images similaires selon des informations sur un attribut de chaque image et les caractéristiques d'images pré-extraites de ladite chaque image comprend les étapes ci-dessous consistant à :
diviser les images, dans le répertoire d'images, en des groupes d'images, selon les informations sur l'attribut de chaque image, dans lequel chacun des groupes d'images comprend au moins deux images ;
calculer une similarité de caractéristiques globales de deux images dans un groupe d'images et une similarité de caractéristiques locales des deux images ;
lorsque la similarité des caractéristiques globales est supérieure à un premier seuil, et lorsque la similarité des caractéristiques locales est supérieure à un deuxième seuil, obtenir un résultat pondéré en pondérant la similarité des caractéristiques globales et la similarité des caractéristiques locales ;
lorsque le résultat pondéré est supérieur à un troisième seuil, définir les deux images comme étant des images similaires qui sont mutuellement similaires ; et
former un groupe d'images similaires avec toutes les images similaires à une même image dans le groupe d'images ;
dans lequel la caractéristique globale décrit un attribut global de contenu d'une image, et comprend un histogramme de répartition de couleurs et un histogramme de texture de motifs binaires locaux, LBP ;
dans lequel la caractéristique locale décrit un changement dans un détail de contenu de l'image, et comprend l'algorithme de transformation de caractéristiques visuelles invariante à l'échelle, SIFT (« Scale-invariant feature transform »), et l'algorithme d'accélération de caractéristiques robustes, SURF, (« Speed Up Robust Features ») ;
dans lequel la caractéristique globale et la caractéristique locale sont chacune constituées de valeurs de caractéristiques de points clés à différentes positions sur l'image ;
dans lequel l'étape de calcul d'une similarité de caractéristiques globales de deux images dans un groupe d'images et d'une similarité de caractéristiques locales des deux images comprend les étapes ci-après consistant à : pour chaque similarité de la similarité des caractéristiques globales des deux images et la similarité des caractéristiques locales des deux images, calculer une distance euclidienne ou une distance cosinus entre les valeurs de caractéristiques à une même position sur les deux images ; dès lors que le calcul de distance a été effectué pour les valeurs de caractéristiques à toutes les positions, compter un nombre de valeurs de caractéristiques avec des distances euclidiennes ou des distances cosinus inférieures à une valeur prédéfinie ; calculer ladite chaque similarité en tant qu'une proportion du nombre des valeurs de caractéristiques avec les distances euclidiennes ou les distances cosinus inférieures à la valeur prédéfinie dans toutes les valeurs de caractéristiques impliquées dans le calcul de distance.

2. Procédé selon la revendication 1, dans lequel l'étape de traitement d'une image dans chaque groupe d'images similaires selon une opération détectée comprend les étapes ci-dessous consistant à :
afficher une option d'enregistrement et une option de suppression sur chaque image de chaque groupe d'images similaires ;
lorsqu'il est détecté qu'une option de suppression sur une image est sélectionnée, supprimer l'image ;
lorsqu'il est détecté qu'une option d'enregistrement sur une image est sélectionnée, enregistrer l'image.

3. Procédé selon la revendication 2, comprenant en outre l'étape ci-après consistant à, après l'étape de suppression de l'image :
envoyer une instruction de suppression à un serveur, dans lequel l'instruction de suppression est configurée de manière à donner instruction au serveur de supprimer l'image dans un espace mémoire infonuagique.

4. Procédé selon l'une quelconque des revendications 1 à 3, comprenant en outre l'étape ci-dessous consistant à :
afficher une option de gestion d'image sur une page de gestion d'espace mémoire (201) ;
dans lequel, lorsqu'il est détecté que l'option de gestion d'image est sélectionnée, l'étape de balayage de toutes les images dans un répertoire d'images (101, 203) est exécutée.

5. Dispositif de traitement d'image, comprenant :
un module de balayage (601), configuré de manière à : au cours d'une gestion d'espace mémoire, balayer toutes les images dans un répertoire d'images ;
un module de génération de groupe d'images similaires (602), configuré de manière à : générer au moins un groupe d'images similaires selon des informations sur un attribut de chaque image et des caractéristiques d'images pré-extraites de ladite chaque image, dans lequel les informations sur l'attribut comprennent au moins un temps de photographie ;
un premier module d'affichage (603), configuré de manière à : afficher des images dans chaque groupe d'images similaires en unités de groupes d'images similaires dans un ordre de temps de photographie ; et
un module de traitement (604) configuré de manière à : traiter une image dans chaque groupe d'images similaires selon une opération détectée ;
dans lequel les caractéristiques d'image comprennent une caractéristique globale et une caractéristique locale ;
le module de génération de groupe d'images similaires (602) est configuré de manière à : diviser les images, dans le répertoire d'images, en des groupes d'images, selon les informations sur l'attribut de chaque image, dans lequel chacun des groupes d'images comprend au moins deux images ; calculer une similarité de caractéristiques globales de deux images dans un groupe d'images et une similarité de caractéristiques locales des deux images ; lorsque la similarité des caractéristiques globales est supérieure à un premier seuil, et lorsque la similarité des caractéristiques locales est supérieure à un deuxième seuil, obtenir un résultat pondéré en pondérant la similarité des caractéristiques globales et la similarité des caractéristiques locales ; lorsque le résultat pondéré est supérieur à un troisième seuil, définir les deux images comme étant des images similaires qui sont mutuellement similaires ; et former un groupe d'images similaires avec toutes les images similaires à une même image dans le groupe d'images ;
dans lequel la caractéristique globale décrit un attribut global de contenu d'une image, et comprend un histogramme de répartition de couleurs et un histogramme de texture de motifs binaires locaux, LBP ;
dans lequel la caractéristique locale décrit un changement dans un détail de contenu de l'image, et comprend l'algorithme de transformation de caractéristiques visuelles invariante à l'échelle, SIFT (« Scale-invariant feature transform »), et l'algorithme d'accélération de caractéristiques robustes, SURF, (« Speed Up Robust Features ») ;
dans lequel la caractéristique globale et la caractéristique locale sont chacune constituées de valeurs de caractéristiques de points clés à différentes positions sur l'image ;
dans lequel le module de génération de groupe d'images similaires (602) est configuré de manière à calculer la similarité des caractéristiques globales des deux images et la similarité des caractéristiques locales des deux images en mettant en œuvre les étapes ci-dessous consistant à : pour chaque similarité de la similarité des caractéristiques globales des deux images et la similarité des caractéristiques locales des deux images, calculer une distance euclidienne ou une distance cosinus entre les valeurs de caractéristiques à une même position sur les deux images ; dès lors que le calcul de distance a été effectué pour les valeurs de caractéristiques à toutes les positions, compter un nombre de valeurs de caractéristiques avec des distances euclidiennes ou des distances cosinus inférieures à une valeur prédéfinie ; calculer ladite chaque similarité en tant qu'une proportion du nombre des valeurs de caractéristiques avec les distances euclidiennes ou les distances cosinus inférieures à la valeur prédéfinie dans toutes les valeurs de caractéristiques impliquées dans le calcul de distance.

6. Dispositif selon la revendication 5, configuré de manière à : afficher une option d'enregistrement et une option de suppression sur chaque image de chaque groupe d'images similaires ; lorsqu'il est détecté qu'une option de suppression sur une image est sélectionnée, supprimer l'image ; et lorsqu'il est détecté qu'une option d'enregistrement sur une image est sélectionnée, enregistrer l'image.

7. Dispositif selon la revendication 6, comprenant en outre :
un module d'envoi, configuré de manière à : envoyer une instruction de suppression à un serveur, dans lequel l'instruction de suppression est configurée de manière à donner instruction au serveur de supprimer l'image dans un espace mémoire infonuagique.

8. Dispositif selon l'une quelconque des revendications 5 à 7, comprenant en outre :
un second module d'affichage, configuré de manière à : afficher une option de gestion d'image sur une page de gestion d'espace mémoire ;
dans lequel le module de balayage (601) est configuré de manière à : lorsqu'il est détecté que l'option de gestion d'image est sélectionnée, balayer toutes les images dans le répertoire d'images.

9. Programme informatique comprenant des instructions pour exécuter les étapes du procédé selon l'une quelconque des revendications 1 à 4, lorsque ledit programme est exécuté par un ordinateur.

10. Support d'enregistrement lisible par un ordinateur et sur lequel est enregistré un programme informatique comprenant des instructions qui, lorsqu'elles sont exécutées par l'ordinateur, l'amènent à mettre en œuvre les étapes du procédé selon l'une quelconque des revendications 1 à 4.
